# EUROPEAN PATENT APPLICATION

(11) **EP 2 634 989 A1**
(43) Date of publication of application: **04.09.2013**
(21) Application number: 12193824.5
(22) Date of filing: 22.11.2012
(51) Int. Cl.: H04L 29/06

(54) **Mobile terminal to detect network attack and method thereof**

(30) Priority: 29.02.2012 KR 20120020841
(71) Applicant: Pantech Co., Ltd, Mapo-gu, Seoul 121-270 (KR)
(72) Inventor: Lee, Hyeon, 121-270 Seoul (KR)
(74) Representative: Jordan, Volker Otto Wilhelm

(57) **Abstract**

A method for detecting a network attack in a wireless terminal, including storing, in a pattern database (DB), information about an attack pattern that is determined using a plurality of control bits indicating a type of a socket data packet, receiving a socket data packet of a target selected to be accessed through a wireless communication interface identifying the at least one socket data packet received, and generating a socket access history by extracting the plurality of control bits indicating the type of the socket data packet using the at least one socket data packet identified, and determining whether a network is under attack, using the pattern DB and the socket access history.

## Description

### CROSS-REFERENCE TO RELATED APPLICATION

This application claims priority from and the benefit of Korean Patent Application No. 10-2012-0020841, filed on February 29, 2012, which is incorporated by reference for all purposes as if fully set forth herein.

### BACKGROUND

FIELD

The following description relates to a mobile terminal to detect a network attack and a method for detecting a network attack.

DISCUSSION OF THE BACKGROUND

The rapid development of wireless networks has allowed for support of a broadband service, installation and execution of various applications through a smart phone, and the like. With the development of the wireless network, network attacks using malicious codes in a wireless network environment are arising with great frequency. For example, such a network attack may include a denial of service (DoS) attack which is a malicious attempt to interrupt a service provided through a network or a server. DoS attacks have been enhanced to a distributed denial of service (DDoS) attack using thousands of zombie PCs through a botnet. Although a variety of defense mechanisms have been suggested to obstruct DDoS attacks, blocking a DDoS attack may be difficult since the DDoS attacks are similar to a normal traffic.

However, since programs used to detect a malicious code may detect only well-known malicious codes, the programs may fail to deal with an actual network terror attack. Also, since a vaccine program may generally set a network access permission in program units, the vaccine program may also fail to prevent a network terror attack through an activated application with respect to unspecified sites in situations in which users are unaware of the network attack.

### SUMMARY

Exemplary embodiments of the present invention provide mobile terminal to detect a network attack.

Exemplary embodiments of present invention also provide a method for detecting a network attack.

Additional features of the invention will be set forth in the description which follows, and in part will be apparent from the description, or may be learned by practice of the invention.

An exemplary embodiment of the present invention discloses an apparatus to detect a network attack, the apparatus including: a pattern database to store network attack patterns; a generating unit to generate a socket access history of a received socket data packet; and a processor to determine if the socket access history matches at least one of the network attack patterns.

An exemplary embodiment of the present invention also discloses a packet driver to detect a network attack, the packet driver including: a monitoring unit to store access flow information of a socket data; a detecting unit to determine if the network is under attack according to the access flow information; a blocking unit to block transmission of the socket data if the network is determined to be under attack; and an information transmitting unit to transmit information about the socket data if the network is determined to be under attack.

An exemplary embodiment of the present invention also discloses a method for detecting a network attack in a wireless terminal, the method including: receiving attack pattern control bits of an attack on the network; determining if control bits of a socket data packet match the attack pattern control bits; and if the control bits of the socket data packet match the attack pattern control bits, blocking a transmission of the socket data packet.

An exemplary embodiment of the present invention also discloses a method for detecting a network attack in a wireless terminal, the method including: receiving a network attack pattern from a server; receiving a socket data packet; generating a socket access history of the socket data packet; determining if the socket access history matches the network attack pattern; if the socket access history matches the network attack pattern: blocking a transmission of the socket data packet from the wireless terminal; collecting information about the socket data packet; and transmitting the collected information about the socket data packet to the server.

An exemplary embodiment of the present invention also discloses a method for detecting a network attack in a wireless terminal, the method including: storing, in a pattern database (DB), information about an attack pattern that is determined using a plurality of control bits indicating a type of a socket data packet; receiving a socket data packet of a target selected to be accessed through a wireless communication interface identifying the at least one socket data packet; generating a socket access history by extracting the plurality of control bits indicating the type of the socket data packet using the at least one socket data packet, and determining whether a network is under attack according to the pattern DB and the socket access history.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram of an open source mobile application platform according to an exemplary embodiment of the present invention.

FIG. 2 is a diagram of an open source mobile application platform according to an exemplary embodiment of the present invention.

FIG. 3 is a flowchart of a method for detecting a network attack in a wireless terminal according to an exemplary embodiment of the present invention.

FIG. 4 is a diagram of a socket data packet according to an exemplary embodiment of the present invention.

FIG. 5 is a diagram of a packet driver according to an exemplary embodiment of the present invention.

FIG. 6 is a diagram of a monitoring unit according to an exemplary embodiment of the present invention.

FIG. 7 is a diagram of a method for detecting a network attack according to an exemplary embodiment of the present invention.

FIG. 8 is a block diagram of an apparatus to detect a network attack in a wireless terminal according to an exemplary embodiment of the present invention.

FIG. 9 is a flowchart of a method for detecting a network attack in a general-purpose device according to an exemplary embodiment of the present invention.

### DETAILED DESCRIPTION OF THE ILLUSTRATED EMBODIMENTS

Exemplary embodiments are described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present. In contrast, when an element is referred to as being "directly on" or "directly connected to" another element or layer, there are no intervening elements or layers present. It will be understood that for the purposes of this disclosure, "at least one of X, Y, and Z" can be construed as X only, Y only, Z only, or any combination of two or more items X, Y, and Z (e.g., XYZ, XYY, YZ, ZZ).

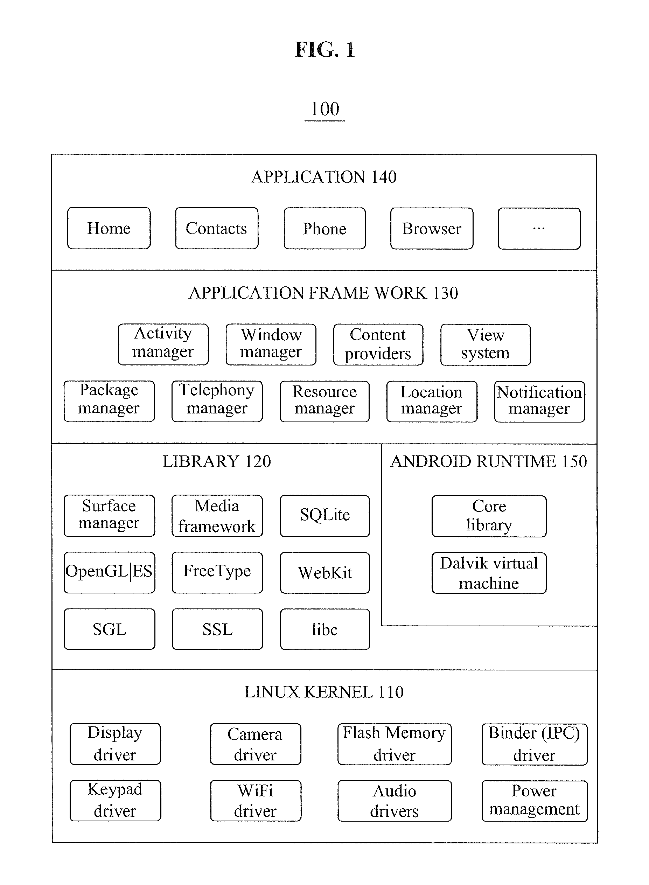

FIG. 1 is a diagram of an open source mobile application platform according to an exemplary embodiment of the present invention.

Referring to FIG. 1, a platform 100 may have a configuration in which an application prepared in the Java language, for example, using the Dalvik virtual machine, and the like, may be executed by a separate processor. Developers may make applications to be executed in a mobile terminal, for example, using a software development kit (SDK). Such applications may be prepared in the Java programming language, and may be executed in the Dalvik virtual machine.

The platform 100 may include a Linux® kernel 110, a library 120, and an application framework 130, and an application 140.

The Linux® kernel 110 may support memory management, process management, and hardware management, for example, management of a network stack, and the like.

The library 120 may support a C/C++ library used in the platform 100, and may include elements that may provide basic functions to the platform 100.

The application framework 130 may provide an application programming interface (API) to be used for developing applications. The application framework 130 may include elements used to generate applications.

The application 140 may include basic applications, for example, an e-mail client, a Short Message Service (SMS) program, a calendar, a map, a browser, and the like.

The platform 100 may include an android runtime 150 to operate an android execution environment. The android runtime 150 may include a core library for the android execution environment, and the Dalvik virtual machine. The platform 100 may be executed, in an order of the Linux® kernel 110, the library 120, the application framework 130, and the application 140.

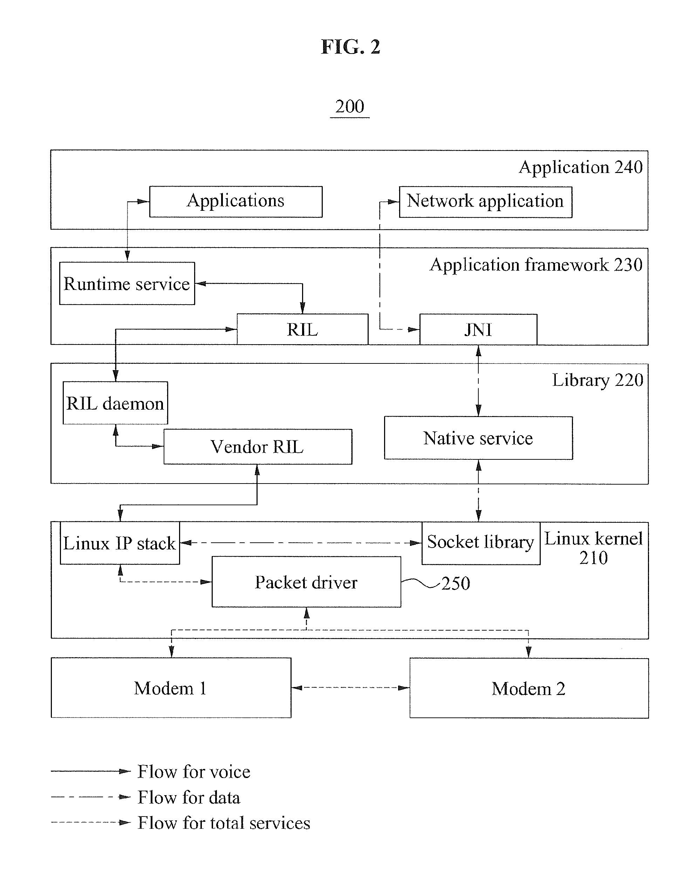

FIG. 2 is a diagram of an open source mobile application platform according to an exemplary embodiment of the present invention.

Referring to FIG. 2, the open source mobile application platform may include a Linux® kernel 210, a library 220, an application framework 230, an application 240, a modem 1, and a modem 2. A method for detecting the network attack in the wireless terminal may be performed by a packet driver 250 disposed in a Linux® kernel 210. However, the packet driver 250 may not be limited thereto. The packet driver 250 may be disposed in various locations, for example, the library 220, the application framework 230, the application 240, and the like.

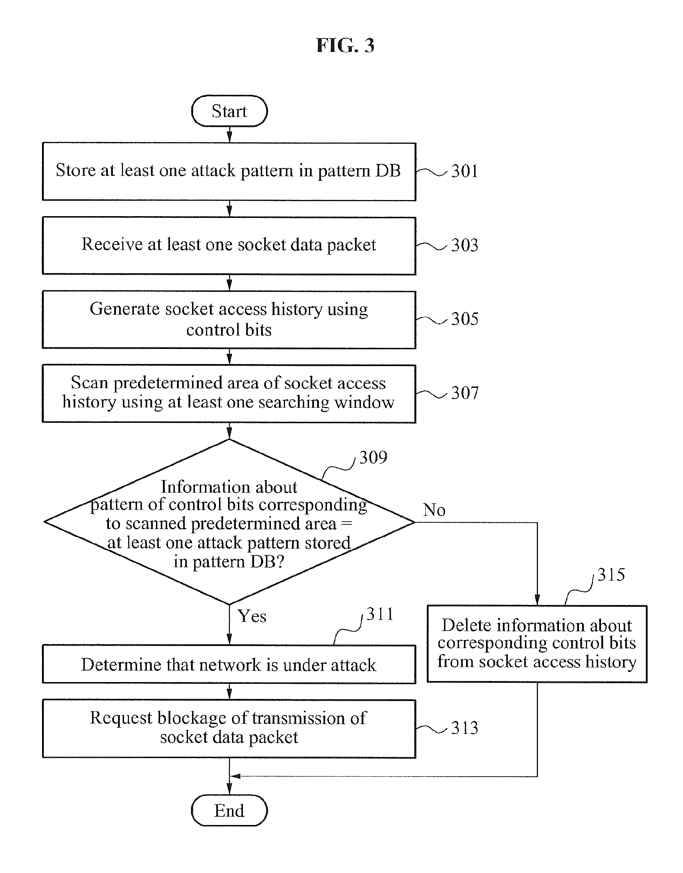

FIG. 3 is a flowchart of a method for detecting a network attack in a wireless terminal according to an exemplary embodiment of the present invention. Although FIG. 3 will be described with reference to the features of FIG. 1, exemplary embodiments are not limited thereto.

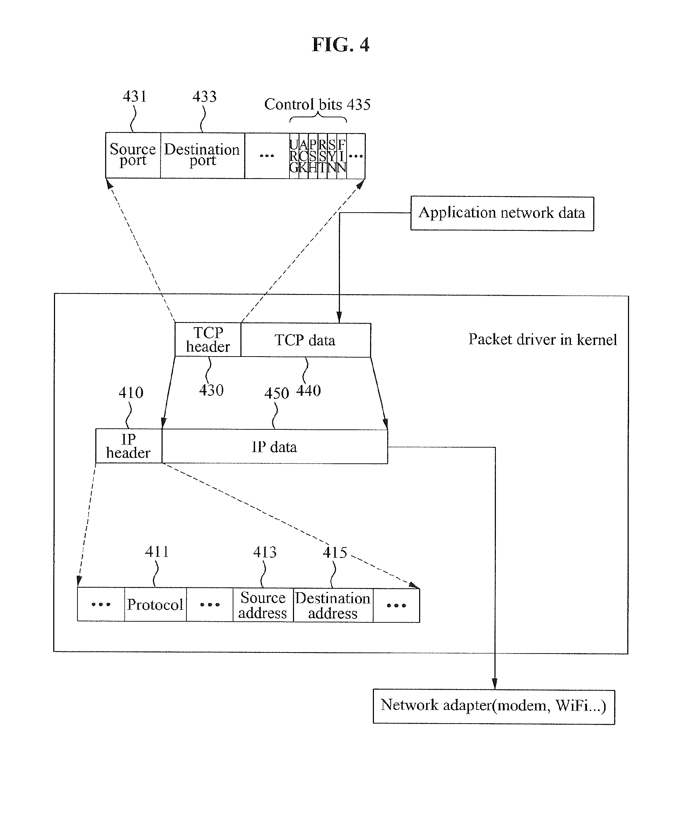

Referring to FIG. 3, in operation 301, an apparatus to detect a network attack in a wireless terminal, which may be referred to as a "detecting apparatus," may store, in a pattern database (DB), which may be referred to as a "network attack access pattern DB," at least one attack pattern. The attack pattern may be determined using a plurality of control bits indicating a type of a socket data packet. The at least one attack pattern may be directly determined or directly verified by the wireless terminal, using the plurality of control bits, or may be received from a central management server, and the like. The control bits will be described with reference to FIG. 4.

In operation 303, the detecting apparatus may receive at least one socket data packet of a target selected to be accessed through a wireless communication interface.

In operation 305, the detecting apparatus may generate a socket access history using a plurality of control bits included in the at least one socket data packet. The detecting apparatus may identify the at least one socket data packet received, based on an address of a destination of the socket data packet and a port of each of at least one destination, and may generate a socket access history by extracting the plurality of control bits indicating the type of the socket data packet using the at least one socket data packet identified.

A method for generating the socket access history by the detecting apparatus will be described herein.

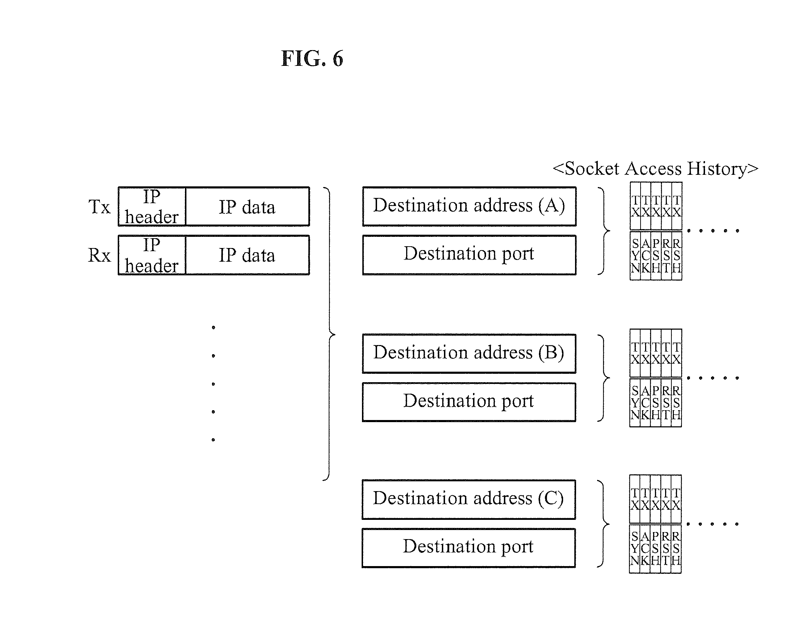

The detecting apparatus may segment the plurality of control bits included in the at least one socket data packet identified, based on each of at least one destination, in particular, based on the address of the destination and the port of each of the at least one destination, as illustrated in FIG. 6, described below. The detecting apparatus may generate the socket access history, based on records chronicling the plurality of control bits segmented.

The detecting apparatus may determine whether a network is under attack, using the pattern DB and the socket access history. In particular, in operation 307, the detecting apparatus may scan a reference area of the socket access history, using at least one a reference searching window. More than one searching window may be used by the detecting apparatus. The detecting apparatus may adjust a size and a direction of movement of the at least one reference searching window, and may scan a reference area of the socket access history, based on the adjusted size and the adjusted direction of movement of the at least one reference searching window.

For example, the detecting apparatus may adjust a size of the searching window from a size '4' to a size '6' to scan a socket access history corresponding to a broader area of the control bits, or may move the searching window from a current location to a left side or a right side of the control bits in the socket access history to scan different areas of the socket access history. The detecting apparatus may scan a reference area of the socket access history, using two searching windows. For example, the detecting apparatus may move the two searching windows from the reference area to an area outside of the reference area by a reference distance to scan a corresponding area, or may move the two searching windows from the area outside of the reference area to an area inside the reference area by a reference distance to scan a corresponding area.

In operation 309, the detecting apparatus may compare information about a pattern of control bits corresponding to the scanned reference area of the socket access history to the at least one attack pattern stored in the pattern DB. If the information about the pattern of the control bits corresponding to the scanned reference area of the socket access history matches the at least one attack pattern stored in the pattern DB, in operation 311, the detecting apparatus may determine that the network is under attack. For example, a pattern of normal control bits may correspond to the following bit pattern: push (PSH), acknowledge (ACK), PSH, ACK, and PSH, and the at least one attack pattern stored in the pattern DB may correspond to the following bit pattern: PSH, PSH, PSH, and ACK. If a pattern of control bits included in the socket access history has a pattern of PSH, PSH, PSH, and ACK, the detecting apparatus may determine that the network is under attack. The pattern of the control bits will be described in greater detail with reference to FIG. 4.

If the information about the pattern of the control bits included in the socket access history does not match the at least one attack pattern stored in the pattern DB, the detecting apparatus may determine that the network attack does not exist and proceed to operation 315. In operation 315, the detecting apparatus may delete the information about the pattern of the corresponding control bits from the socket access history and may terminate the method.

If the information about the pattern of the control bits included in the socket access history matches with the attack pattern stored in the pattern DB, in operation 311, the detecting apparatus determines that the network is under attack, based on a result of the operation 309. In operation 313, the detecting apparatus may request a network adapter block transmission of the socket data packet to the destination address. The detecting apparatus may identify a process identifier (ID) of an application requesting the transmission of the socket data packet to the at least one destination address, and may transmit information including the process ID of the application to the network adapter. The process ID of the application may refer to an ID assigned to the corresponding application if the application is executed by a processor, and the like.

The detecting apparatus may allow for intensive management with respect to a network attack, by collecting information about applications, and information associated with the network attack with respect to a socket data packet, and transmitting the collected information to a user of a terminal or a management server.

FIG. 4 is a diagram of a socket data packet according to an exemplary embodiment of the present invention. The socket data packet may be used for transmission and reception in a method for detecting a network attack in a wireless terminal.

Referring to FIG. 4, a socket data packet 400 may include an Internet Protocol (IP) header field 410, an IP data field 450. The IP header field 410 may include a protocol 411, a source address 413, and a destination address 415.

The protocol 411 may indicate an upper protocol with respect to an IP socket. For example, the protocol 411 may indicate the upper protocol is a Transmission Control Protocol (TCP), a User Datagram Protocol (UDP), and the like.

The source address 413 may refer to an IP address of the wireless terminal that may be assigned to the wireless terminal by a network.

The destination address 415 may refer to an IP address to which network data of an application is selected to be transmitted, i.e., a target IP address.

The IP data field 450 may include a TCP header 430, and TCP data 440. Although the IP data field is described with reference to a TCP, aspects are not limited thereto and, for example, the header 430 and data 440 may be a UDP header and a UDP data.

The TCP header 430 may include a source port 431, a destination port 433, and a plurality of control bits 435.

The source port 431 may have a length of 16-bits in total, and may indicate an IP port number of a corresponding TCP/IP source. For example, Port 80 may indicate the Hypertext Transfer Protocol (HTTP), and Port 21 may indicate the File Transfer Protocol (FTP). Although described as 16-bits, the source port 431 is not limited thereto and may be any number of bits.

The destination port 433 may refer to an IP port number of a corresponding TCP/IP destination.

The plurality of control bits 435 may include the following bits. However, the control bits 435 are not limited to the bits enumerated below. TCP may use these bits to define the purpose and contents of a packet.

An urgent (URG) bit may indicate an urgent pointer priority packet. If the URG bit is set to '1,' an item or data in the urgent pointer priority packet may indicated in an urgent pointer may correspond to an existing byte stream, in other words, a message or data to be transmitted for exchanging data or controlling an application process.

An acknowledge (ACK) bit may indicate that a value of an ACK number is input in a number item for an acknowledgement if the ACK bit is set to '1.'

A push (PSH) bit may be used if data received from the TCP is to be transferred to an upper layer process immediately.

A reset (RST) bit may be used to reset a TCP connection, due to a reference error or a user command. The RST bit may be used to perform forced termination due to an abnormal operation after a session is established.

A synchronize (SYN) bit may be used to request a destination host for packet transmission task connection. If the SYN bit is set to '1,' it may be understood that the TCP connection is requested.

A finish (FIN) bit may indicate a request for termination of the connection. The FIN bit may be used to report termination of packet transmission task to the destination host.

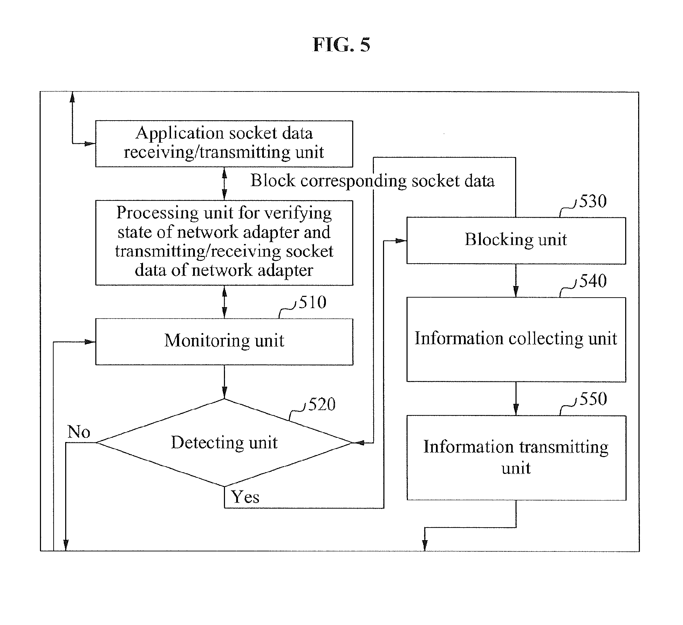

FIG. 5 is a diagram of a packet driver according to an exemplary embodiment of the present invention. The packet driver may perform a method for detecting a network attack in a wireless terminal.

Referring to FIG. 5, the packet driver may include a monitoring unit 510, a detecting unit 520, a blocking unit 530, an information collecting unit 540, and an information transmitting unit 550.

The monitoring unit 510 may monitor transmitted socket data and received socket data with respect to a target IP corresponding to a uniform resource locator (URL) address, a website, or a server that is selected to be accessed in a request from an upper application. Information associated with an access flow of the monitored socket data may be stored for each target IP.

The detecting unit 520 may determine whether a network is under attack according to the information associated with the access flow of the socket data stored in the monitoring unit 510 for each target IP.

If it is determined that the network is under attack, the detecting unit 520 may report that the network is under attack to the blocking unit 530, and may request that the blocking unit 530 block transmission of corresponding socket data. Conversely, if it is determined that the network attack is nonexistent, the detecting unit 520 may organize information classified for each target IP to date, and may process the corresponding socket data through a selected network adapter by a similar process of processing a socket data packet.

The blocking unit 530 may block the transmission of socket data to the network adapter of the socket data packet of a target IP determined by the detecting unit 520 to be a network attack. The blocking unit 530 may transfer, to the information collecting unit 540, the information about an application requesting the socket data packet.

The information collecting unit 540 may collect and organize information about a network attack type or an attack pattern received from the blocking unit 530.

The information collecting unit 540 may collect information associated with a network attack according to a socket data packet, and information about an application requesting the socket data packet under network attack, through data stored in the monitoring unit 510 and application registration information. The information associated with the network may include, for example, an IP being targeted, a point in time when a network attack is attempted, and a point in time when transmission of the socket data packet is blocked. The information about the application may include, for example, a name of the corresponding application, a version of an installed application, and the like.

The information transmitting unit 550 may transmit to a selected central management server information collected using a separate socket data packet. The information transmitting unit 550 may report whether the network is under attack. The collected information may be displayed on a screen of a wireless terminal, such that a user may be informed of the network attack.

The packet driver may include an application socket data receiving/transmitting unit, and a processing unit to determine a state of a network adapter and transmitted/received socket data of the network adapter. The application socket data receiving/transmitting unit may transmit/receive application socket data. The processing unit may determine a state of the network adapter. The processing unit may process the transmission and the reception of socket data of the network adapter.

FIG. 6 is a diagram of an operational method of a monitoring unit of FIG. 5. Although FIG. 6 is described with reference to the monitoring unit 510 of FIG. 5 and the packet driver of FIG. 2, exemplary embodiments are not limited thereto.

Referring to FIG. 6, the monitoring unit 510 may monitor a socket data packet transmitted and received by the packet driver 250 of FIG. 2, for each target IP. The monitoring unit 510 may segment TCP control bits of a transmitted (Tx) socket data packed and a received (Rx) socket data packet, according to a destination address included in an IP header and a destination port, for each target IP.

The monitoring unit 510 may store records chronicling the plurality of control bits segmented in the form of a separate file. The records may be stored to be classified for each destination address and destination port, and may be referred to as a socket access history.

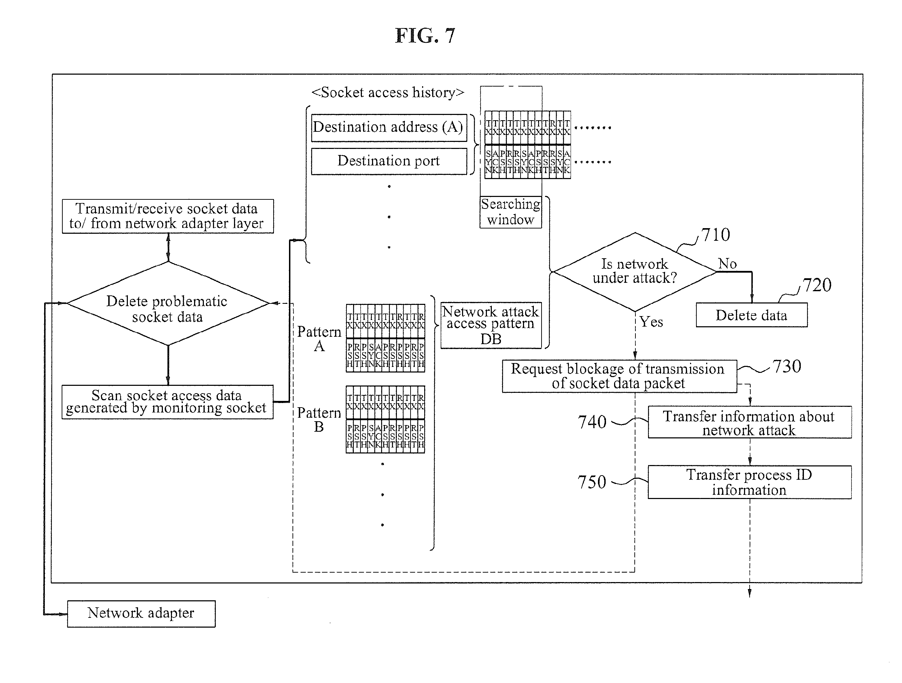

FIG. 7 is a diagram of a method for detecting a network attack according to an exemplary embodiment of the present invention. Although FIG. 7 will be described with reference to the features of FIG. 5, exemplary embodiments are not limited thereto.

Referring to FIG. 7, in operation 710, the detecting unit 520 may verify or determine whether a network is under attack, by comparing a socket access history stored by the monitoring unit 510 to a pattern DB.

The detecting unit 520 may scan a reference area of the socket access history, using at least one reference searching window. The detecting unit 520 may determine whether the network is under attack, by comparing information about a pattern of control bits corresponding to the scanned reference area of the socket access history to the attack pattern stored in the pattern DB.

For example, a pattern of normal control bits may correspond to bit pattern of PSH, ACK, PSH, ACK, and PSH, and the at least one attack pattern stored in the pattern DB may correspond to a bit pattern of PSH, PSH, PSH, and ACK. If the pattern of the control bits included in the socket access history has a pattern of PSH, PSH, PSH, and ACK, the detecting unit 520 may determine that the network is under attack.

The searching window may refer to a reference time interval, or a number of control bits, and may correspond to a reference range or a size of a reference area in which comparison with attack patterns is performed.

In operation 720, the detecting unit 520 may delete, from the socket access history, data related to areas not including the attack patterns, based on the determinations made in operation 710 with respect to the scanned areas of the socket access history.

In operation 730, if a pattern matching the pattern DB is observed in the scanned areas of the socket access history, the blocking unit 530 may block the corresponding socket data packet from being transferred to a destination address, by enabling the detecting unit 520 to request a network adapter to terminate data transmission of the socket data packet to a corresponding destination address.

In operation 740, the blocking unit 530 may transfer information about the network attack to the information collecting unit 540. The information about the network attack may include, for example, a network attack type or an attack pattern, a point in time when the network attack was attempted, and the like.

In operation 750, the blocking unit 530 may obtain a process ID of an application requesting a transmission service of the socket data packet to the corresponding destination address, and may transfer the process ID to the information collecting unit 540.

The information collecting unit 540 may collect and organize information related to the network attack. For example, the information collecting unit 540 may obtain information about an application that is collected through an android function, for example, ActivityManager.RunningAppProcessInfo, and the like. The information about the application may include information about a version of the application, a time of a recent update, and the like.

The information collecting unit 540 may collect the information, using the process ID of the application received from the blocking unit 530.

The information collecting unit 540 may collect information about the application and information associated with the network attack received from the blocking unit 530, and may store the collected information. The collected information may be referred to as network attack preventing information. The information about the application may be final information about the application. The information associated with the network attack may be final information associated with the network attack.

The information collecting unit 540 may transfer the network attack preventing information to the information transmitting unit 550.

The information transmitting unit 550 may transfer the network attack preventing information in a form of a socket data packet, for example, to a law enforcement or other entity, a separate central management server related to preventive measures against network attacks, or the like. The information transmitting unit 550 may display the network attack preventing information on a screen of a user terminal, and the like such that a user may view the network attack preventing information.

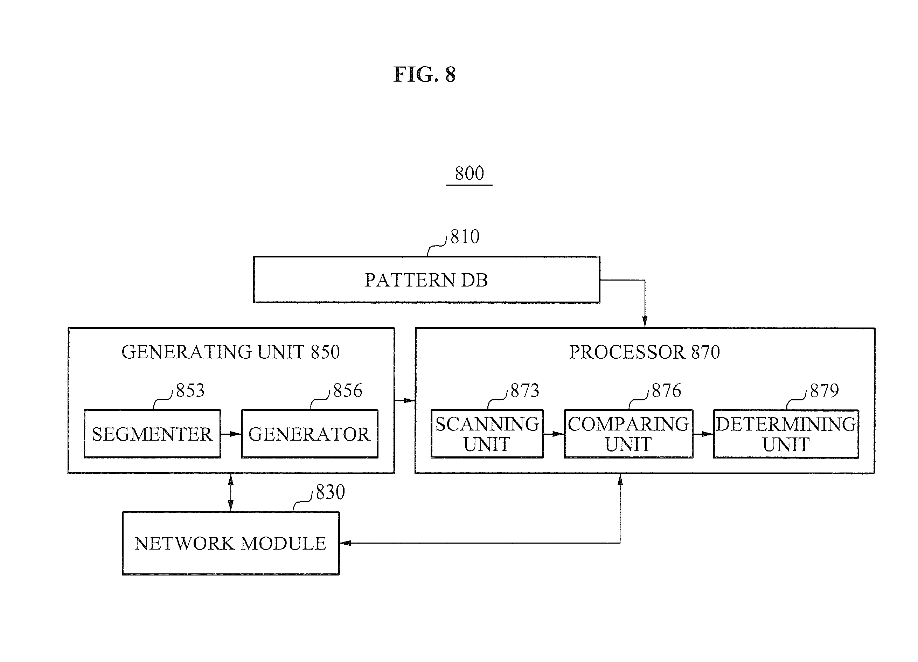

FIG. 8 is a block diagram of an apparatus to detect a network attack in a wireless terminal according to an exemplary embodiment of the present invention. Referring to FIG. 8, a detecting apparatus 800 may include a pattern DB 810, a network module 830, a generating unit 850, and a processor 870.

The pattern DB 810 may store an attack pattern that is determined using a plurality of control bits indicating a type of a socket data packet. The at least one attack pattern may be directly determined or directly verified by the wireless terminal, using the plurality of control bits, or may be received from a central management server, and the like. More than one attack pattern may be stored in the pattern DB 810.

The network module 830 may receive at least one socket data packet through a wireless communication interface.

The generating unit 850 may identify the at least one socket data packet received by the network module 830, and may generate a socket access history by extracting the plurality of control bits indicating a type of the socket data packet using the at least one socket data packet identified.

The plurality of control bits may include at least one of a URG bit indicating data to be transmitted for exchanging data or controlling an application process, an ACK bit indicating a value of an ACK number for an acknowledgement, a PSH bit indicating that received data is to be transferred to an upper layer process, a RST bit used to reset a connection, due to a reference error or a user command, a SYN bit indicating a connection request, and an FIN bit requesting termination of the connection.

The generating unit 850 may identify the at least one socket data packet, based on an address of the destination of the socket data packet and a port of each of at least one destination.

The generating unit 850 may include a segmenter 853 and a generator 856.

The segmenter 853 may segment the plurality of control bits included in the at least one socket data packet identified, based on each of at least one destination. The generator 856 may generate the socket access history, based on records chronicling the segmented plurality of control bits.

The processor 870 may determine whether a network is under attack, using the pattern DB 810 and information about a pattern of the plurality of control bits included in the at least one socket data packet.

The processor 870 may include a scanning unit 873, a comparing unit 876, and a determining unit 879.

The scanning unit 873 may scan a reference area of the socket access history, using at least one reference searching window.

The scanning unit 873 may adjust a size and a direction of movement of the at least one reference searching window, and may scan a reference area of the socket access history, based on the adjusted size and the adjusted direction of movement of the at least one reference searching window.

The comparing unit 876 may compare information about a pattern of control bits corresponding to the scanned reference area of the socket access history to the at least one attack pattern stored in the pattern DB.

The determining unit 879 may determine whether the network is under attack, based on a result of the comparing unit 876.

The processor 870 may request a network adapter to block transmission of the socket data packet to an address of the destination, based on a result of the attack determination by the determining unit 879.

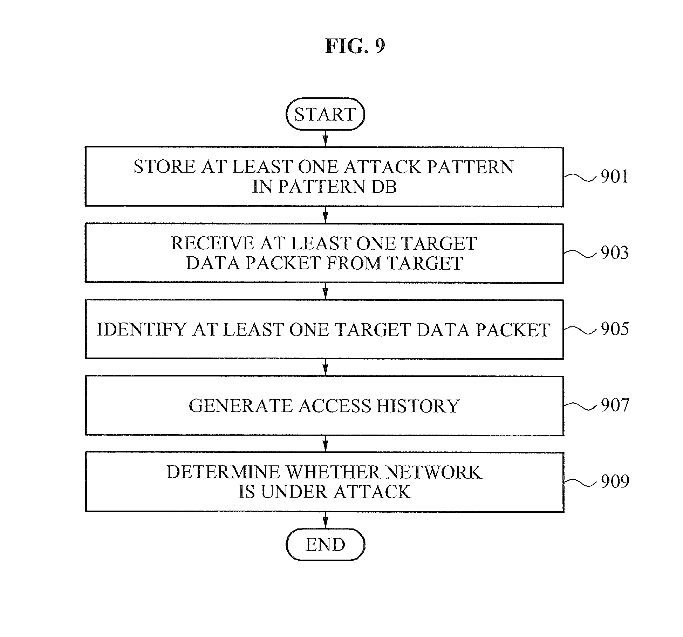

FIG. 9 is a flowchart of a method for detecting a network attack in a general-purpose device according to an exemplary embodiment of the present invention.

Referring to FIG. 9, in operation 901, a general-purpose device may store, in a pattern DB, an attack pattern that is determined using a plurality of control bits indicating a type of a socket data packet. The general-purpose device may be any device which may access a network, such as, a mobile phone, a smart phone, a tablet computer, a laptop computer, a personal computer, a gaming console, etc. The general-purpose device may store more than one attack pattern.

The at least one attack pattern may be directly determined or directly verified by the general-purpose device, using the plurality of control bits, or may be received from a central management server, and the like.

In operation 903, the general-purpose device may receive at least one target data packet from a target that an application requests access to.

In operation 905, the general-purpose device may identify the at least one target data packet based on an address of a destination of the target data packet and a port of each of at least one destination.

In operation 907, the general-purpose device may generate an access history using the plurality of control bits. The general-purpose device may segment a plurality of control bits included in the at least one target data, based on the address of the destination and the port of each of the at least one destination, and may generate the access history based on records chronicling the plurality of control bits segmented.

In operation 909, the general-purpose device may determine whether a network is under attack, using the pattern DB and the access history.

The general-purpose device may scan a reference area of the access history, using at least one reference searching window, and may compare information about a pattern of control bits corresponding to the scanned reference area of the access history to the at least one attack pattern stored in the pattern DB, thereby determining whether the network is under attack.

A method for scanning the reference area of the access history by the general-purpose device will be described herein.

The general-purpose device may adjust a size and a direction of movement of the at least one reference searching window, and may scan a reference area of the access history, based on the adjusted size and the adjusted direction of movement of the at least one reference searching window.

The general-purpose device may compare the information about the pattern of the control bits corresponding to the scanned reference area of the access history to the at least one attack pattern stored in the pattern DB, and may determine whether the network is under attack based on a result of the comparison. The pattern DB may store information in which information of control bits with respect to a TCP/IP access attempt of a network attack that is verified to date may be organized for each pattern, for example, a pattern A, a pattern B, and the like, as illustrated in FIG. 7.

A Cyber Terror Response Center, a network-associated server, and the like may provide, to the general-purpose device patterns used for attacks on networks. The general-purpose device may recognize the attack patterns used for the attacks on the network, by storing the patterns in the pattern DB.

The exemplary embodiments according to the present invention may be recorded in non-transitory computer-readable media including program instructions to implement various operations embodied by a computer. The non-transitory computer-readable medium may include, alone or in combination with the program instructions, data files, data structures, and the like. The non-transitory computer-readable medium and program instructions may be those specially designed and constructed for the purposes of the present invention, or they may be of the kind well-known and available to those having skill in the computer software arts. Examples of non-transitory computer-readable media include magnetic media such as hard disks, floppy disks, and magnetic tape; optical media such as CD ROM discs and DVD; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

According to exemplary embodiments of the present invention, a mobile device through comparison of information about a socket access history generated using control bits included in a transmitted and a received socket data packet to information stored in a network access pattern DB may defend against a network attack, damage caused by a network attack, for example, a virus, and the like, may be reduced or prevented, and a denial of service (DoS) attack caused by exhaustion of wireless network resources and battery consumption that may occur wirelessly may be reduced or prevented.

According to exemplary embodiments of the present invention, by scanning, using a searching window, a socket access history corresponding to records chronicling control bits included in a socket data packet, and comparing the scanned socket access history to existing attack patterns, the instability of a wireless network resulting from a plurality of concurrent access attempts caused by a network attack may be reduced or prevented.

According to exemplary embodiments of the present invention, by requesting a network adapter to block transmission of a corresponding socket data packet, based on a result of comparing information about a socket access history to information stored in a network access pattern DB, a network attack may be prevented at a point in time when the network attack occurs, thereby preventing unreasonable charges for an amount of data used wrongfully due to the network attack.

According to exemplary embodiments of the present invention, by verifying a processor ID of an application requesting a socket data packet which is determined to be a network attack the processor ID may be provided to a management server configured to monitor network attacks, Information about a user accessing a network associated with the network attack and application information may be used by the management server for management and tracing of a participant at a point in time when the network attack may originate.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for detecting a network attack in a wireless terminal, including storing, in a pattern database (DB), information about an attack pattern that is determined using a plurality of control bits indicating a type of a socket data packet, receiving a socket data packet of a target selected to be accessed through a wireless communication interface identifying the at least one socket data packet received, and generating a socket access history by extracting the plurality of control bits indicating the type of the socket data packet using the at least one socket data packet identified, and determining whether a network is under attack, using the pattern DB and the socket access history.

## Claims

1. An apparatus to detect a network attack, the apparatus comprising:
a pattern database to store network attack patterns;
a generating unit to generate a socket access history of a received socket data packet; and
a processor to determine if the socket access history matches at least one of the network attack patterns.

2. The apparatus of claim 1, wherein the generating unit comprises:
a segmenter to segment control bits of the socket data packet according to a destination address and destination port of the control bits; and
a generator to generate the socket access history according to the segmented control bits.

3. The apparatus of claim 1 or 2, wherein the processor scans the socket access history using a reference search window and determines if the socket access history matches the network attack pattern by comparing the scanned socket access history to the network attack patterns.

4. A packet driver to detect a network attack, the packet driver comprising:
a monitoring unit to store access flow information of a socket data;
a detecting unit to determine if the network is under attack according to the access flow information;
a blocking unit to block transmission of the socket data if the network is determined to be under attack; and
an information transmitting unit to transmit information about the socket data if the network is determined to be under attack.

5. The packet driver of claim 4, further comprising:
an information collecting unit to collect information about the socket data if the network is determined to be under attack.

6. The packet driver of claim 4 or 5, wherein the detecting unit is adapted to determine if the network is under attack according to the access flow information by generating a socket access history and determining if the socket access history matches a network attack pattern;
wherein the detecting unit preferably is adapted to determine if the socket access history matches the network attack pattern by comparing a portion of the search access history with the network attack pattern according to a searching window;
and wherein the detecting unit preferably is adapted to delete the socket access history if the network is not under attack.

7. The packet driver of one of claims 4 to 6, wherein the monitoring unit segments control bits of the socket data according to a destination address and a destination port of the control bits.

8. A method for detecting a network attack in a wireless terminal, the method comprising:
receiving attack pattern control bits of an attack on the network;
determining if control bits of a socket data packet match the attack pattern control bits;
and
if the control bits of the socket data packet match the attack pattern control bits, blocking a transmission of the socket data packet.

9. The method of claim 8, further comprising:
generating a socket access history from the control bits of the socket data packet;
scanning the socket access history using a reference search window,
wherein the determining if the control bits of the socket data packet match the attack pattern control bits comprises determining if the scanned socket access history match the attack pattern control bits;
wherein generating the socket access history preferably comprises:
segmenting control bits according to a destination address and a destination port.

10. The method of claim 9, further comprising:
deleting the socket access history if it does not match the attack pattern control bits.

11. The method of one of claims 8 to 10, wherein the control bits comprise at least one of an urgent (URG) bit, an acknowledge (ACK) bit, a push (PSH) bit, a reset (RST) bit, and a synchronize (SYN) bit.

12. The method of one of claims 8 to 11,
further comprising:
transmitting an indicator of network attack if the control bits of the socket data packet matches the attack pattern control bits;
or/and
further comprising:
transmitting a process identification information about an application requesting the socket packet data if the control bits of the socket data packet match the attack pattern control bits.

13. A method for detecting a network attack in a wireless terminal, preferably according to one of claims 8 to 12, the method comprising:
receiving a network attack pattern from a server;
receiving a socket data packet;
generating a socket access history of the socket data packet;
determining if the socket access history matches the network attack pattern;
if the socket access history matches the network attack pattern:
blocking a transmission of the socket data packet from the wireless terminal;
collecting information about the socket data packet; and
transmitting the collected information about the socket data packet to the server.

14. The system of claim 13,
further comprising:
scanning the socket access history using a reference search window; and
wherein determining if the socket access history matches the network attack pattern comprises determining if the scanned socket access history matches the network attack pattern;
and/or
further comprising:
deleting the socket access history if the socket access history does not match the network attack pattern.

15. A method for detecting a network attack in a wireless terminal, the method comprising:
storing, in a pattern database (DB), information about an attack pattern that is determined using a plurality of control bits indicating a type of a socket data packet;
receiving a socket data packet of a target selected to be accessed through a wireless communication interface identifying the at least one socket data packet;
generating a socket access history by extracting the plurality of control bits indicating the type of the socket data packet using the at least one socket data packet, and
determining whether a network is under attack according to the pattern DB and the socket access history.
